# EUROPEAN PATENT APPLICATION

(11) **EP 4 407 746 A1**
(43) Date of publication of application: **31.07.2024**
(21) Application number: 23742713.3
(22) Date of filing: 06.01.2023
(51) Int. Cl.: H01M 10/48

(54) **BATTERY MODULE SAMPLING ASSEMBLY, BATTERY PACK, AND POWER-CONSUMING APPARATUS**

(30) Priority: 24.01.2022 CN 202220193627 U
(71) Applicant: Contemporary Amperex Technology Co., Limited, Ningde, Fujian 352100 (CN)
(72) Inventor: WANG, Chong, Ningde, Fujian 352100 (CN); ZHENG, Chenling, Ningde, Fujian 352100 (CN); CHEN, Zhiming, Ningde, Fujian 352100 (CN); GAN, Weifeng, Ningde, Fujian 352100 (CN); WANG, Yu, Ningde, Fujian 352100 (CN)
(74) Representative: Ziebig Hengelhaupt Intellectual Property Attorneys Patentanwaltskanzlei PartGmbB
(86) International application number: PCT/CN2023/070803
(87) International publication number: WO 2023/138397

(57) **Abstract**

This application relates to a battery module sampling assembly, a battery pack, and an electric apparatus. The battery module sampling assembly includes a sampling module assembly and a battery management module assembly. The sampling module assembly includes a sampling unit (200) in corresponding electrical connection with a battery module (100). The sampling unit (200) includes a first collection terminal (210). The battery management module assembly includes a battery management module unit (300) corresponding to the sampling unit (200). The battery management module unit (300) has a second collection terminal (310) matching the first collection terminal (210) to electrically connect the battery management module unit (300) to the sampling unit (200).

## Description

### CROSS-REFERENCE TO RELATED APPLICATIONS

This application refers to Chinese Patent Application No. 202220193627.3, filed on January 24, 2022 and entitled "BATTERY MODULE SAMPLING ASSEMBLY, BATTERY PACK, AND ELECTRIC APPARATUS", which is incorporated herein by reference in its entirety.

### TECHNICAL FIELD

This application relates to the field of battery technologies, and in particular, to a battery module sampling assembly, a battery pack, and an electric apparatus.

### BACKGROUND

Currently, to reduce environmental pollution from gasoline and the like, batteries have been widely used in electric apparatuses such as vehicles, ships, or aircrafts to provide electric propulsion for the electric apparatuses. To meet the high power requirements of the electric apparatuses, batteries typically may consist of a battery pack formed by a plurality of battery cells.

In a conventional battery pack, the voltage and temperature sampling wire harnesses for battery modules occupy a significant amount of space, leading to low space utilization of the battery pack.

### SUMMARY

In view of this, it is necessary to provide a battery module sampling assembly, a battery pack, and an electric apparatus, so as to address the problem of low space utilization of conventional battery packs.

According to a first aspect of this application, a battery module sampling assembly is provided, including a sampling module assembly and a battery management module assembly. The sampling module assembly includes a sampling unit in corresponding electrical connection with a battery module, where the sampling unit includes a first collection terminal. The battery management module assembly includes a battery management module unit corresponding to the sampling unit, where the battery management module unit has a second collection terminal matching the first collection terminal to electrically connect the battery management module unit to the sampling unit.

In the technical solutions of this application, when the battery module sampling assembly is in use, the first collection terminal can be connected to the second collection terminal in a fitting manner, so that voltage signals, temperature signals, and the like of battery cells in the battery module can be transmitted to the battery management module unit through the sampling unit, the first collection terminal, and the second collection terminal, so as to implement effective transmission and collection of signals such as voltage signals and temperature signals of the battery cells; and the battery management module unit can also perform thermal management, safety management, and/or the like on the battery cells in the battery module. It can be understood that the sampling unit is directly connected to the battery management module unit, omitting adapting wire harness connected between the sampling unit and the battery management module unit, and thereby improving space utilization of a battery pack.

In an embodiment, each battery module includes a plurality of battery cells, and the first collection terminal has a plurality of first collection ports to be in corresponding electrical connection with the plurality of battery cells in the battery module. In this way, the battery management module unit can obtain signals such as voltage signals and temperature signals of corresponding battery cells via the first collection ports of the first collection terminal of the sampling unit, making it more convenient for effective transmission and collection of signals such as voltage signals and temperature signals.

In an embodiment, the sampling module assembly includes a plurality of sampling units, and the first collection terminal of each sampling unit further has a second collection port. In any two of the sampling units, the second collection port of the first collection terminal of one sampling unit and the second collection port of the first collection terminal of the other sampling unit are electrically connected to each other. One battery management module unit can collect signals such as voltage signals and temperature signals of battery cells in at least two battery modules via two collection units electrically connected to each other, widening the application range of the battery module sampling assembly.

In an embodiment, in any two of the sampling units, a first connector assembly is connected to the second collection port of one first collection terminal, and a second connector assembly matching the first connector assembly is connected to the second collection port of the other first collection terminal. In this way, one battery management module unit can collect signals such as voltage signals and temperature signals of battery cells in at least two battery modules. In addition, the first connector assembly is detachably connected to the second connector assembly, making it convenient for disassembling and assembling, and facilitating mass production of the battery module sampling assembly.

In an embodiment, the first connector assembly is provided with a slot portion, and the second connector assembly is provided with an inserting portion fitting with the slot portion, so that the second connector assembly is able to be electrically connected to the first connector assembly when the inserting portion is inserted in the slot portion. The first connector assembly and the second connector assembly are electrically connected to each other through insertion, featuring convenient operation, and thus effectively improving assembling efficiency while also facilitating mass production of the battery module sampling assembly.

In an embodiment, the slot portion includes a first slot and a second slot, and the inserting portion includes a first inserting portion and a second inserting portion connected to the first inserting portion. The first inserting portion is inserted in the first slot, and the second inserting portion is inserted in the second slot. The first inserting portion is inserted in the first slot and the second inserting portion is inserted in the second slot, so that the inserting portion is more firmly inserted in the slot portion, improving reliability of the electrical connection between the first connector assembly and the second connector assembly.

In an embodiment, the first collection terminal of each sampling unit has two second collection ports, where a first connector assembly and a second connector assembly matching the first connector assembly are respectively connected to the two second collection ports of the first collection terminal of one sampling unit. This not only facilitates the electrical connection between two adjacent sampling units but also improves the assembling efficiency.

In an embodiment, the sampling unit further includes a connecting assembly, and the first collection terminal of each sampling unit is configured to be in corresponding electrical connection with the battery cells via the connecting assembly. In this way, the battery management module unit can obtain signals such as voltage signals and temperature signals of a plurality of battery cells via the first collection terminal and connecting assembly of a corresponding sampling unit, implementing effective transmission and collection of signals such as voltage signals and temperature signals.

In an embodiment, the connecting assembly includes a cable with one end connected to the first collection terminal and a plurality of electrically conductive components disposed on the cable. Each of the electrically conductive components is configured to be electrically connected to one corresponding battery cell. In this way, the battery management module unit can obtain signals such as voltage signals and temperature signals of the plurality of battery cells via the sampling unit, implementing effective transmission and collection of signals such as voltage signals and temperature signals.

According to a second aspect of this application, a battery pack is provided, including the foregoing battery module sampling assembly and a battery module.

In an embodiment, the battery pack further includes an upper housing body and a lower housing body, where the upper housing body and the lower housing body define an accommodating recess, and the battery module, the sampling module assembly, and the battery management module assembly are all accommodated in the accommodating recess. In this way, the battery module, the sampling module assembly, and the battery management module assembly can be well protected, and it is also convenient to move the battery pack as a whole, improving the reliability and convenience of use of the battery pack.

According to a third aspect of this application, an electric apparatus is provided, including the foregoing battery pack.

Details of one or more embodiments of this application are illustrated in the following drawings and description. Other features, objects, and advantages of this application will become apparent from the specification, the accompanying drawings, and the claims.

### BRIEF DESCRIPTION OF DRAWINGS

Persons of ordinary skill in the art can clearly understand various other advantages and benefits by reading the detailed description of the preferred embodiments below. In addition, to better describe and illustrate those embodiments and/or examples in the present invention disclosed herein, reference may be made to one or more accompanying drawings. Additional details or examples used to describe the accompanying drawings should not be construed as limiting the scope of any one of the disclosed invention, the currently described embodiments and/or examples, and the best one of modes in the present invention currently understood.
FIG. 1 is a schematic structural diagram of a vehicle according to one or more embodiments.
FIG. 2 is a schematic structural diagram of a battery pack according to one or more embodiments.
FIG. 3 is a schematic structural diagram of a battery management module unit according to one or more embodiments.
FIG. 4 is a schematic diagram of a partial structure of a sampling unit according to one or more embodiments.
FIG. 5 is a schematic structural diagram of a plurality of sampling units and a plurality of battery management module units according to one or more embodiments.
FIG. 6 is a schematic diagram of a partial structure in FIG. 5.
FIG. 7 is a schematic structural diagram of a first connector assembly and a second connector assembly (before insertion) according to one or more embodiments.
FIG. 8 is a schematic structural diagram of a first connector assembly and a second connector assembly (after insertion) according to one or more embodiments.

Reference signs: 1. vehicle; 10. battery pack; 100. battery module; 110. battery cell; 200. sampling unit; 210. first collection terminal; 211. first collection port; 212. second collection port; 220. cable; 221. wire; 230. electrically conductive component; 241. first connector assembly; 2411. first slot; 2412. second slot; 2413. side portion; 242. second connector assembly; 2421. first inserting portion; 2422. second inserting portion; 300. battery management module unit; 310. second collection terminal; 410. upper housing body; 420. lower housing body; 20. motor; and 30. controller.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", "have", and any other variations thereof in the specification, claims and brief description of drawings of this application are intended to cover non-exclusive inclusions.

In the description of the embodiments of this application, the technical terms "first", "second", and the like are merely for the purpose of description, and shall not be understood as any indication or implication of relative importance or any implicit indication of the number, sequence, or primary-secondary relationship of technical features indicated. In the description of this application, "a plurality of" means at least two unless otherwise specifically stated.

Reference to "embodiment" in this specification means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this specification may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skills in the art can understand specific meanings of these terms in the embodiments of this application as appropriate to specific situations.

Currently, to reduce environmental pollution from gasoline and the like, batteries have been widely used in electric apparatuses such as vehicles, ships, or aircrafts to provide electric propulsion for the electric apparatuses. To meet the high power requirements of the electric apparatuses, batteries typically may consist of a battery pack formed by a plurality of battery cells.

In a conventional battery pack, the voltage and temperature sampling wire harnesses for battery modules occupy a significant amount of space, leading to low space utilization of the battery pack.

The inventors of this application have noted that the reason for low space utilization of the conventional battery pack is that in the conventional battery pack, a battery management module needs to be connected to a sampling board via an adapter, for example, an adapting wire harness, so as to obtain the voltage and temperature data of the battery module. The adapter occupies the internal space of the battery pack, thus leading to low space utilization of the battery pack.

To solve the problem of low space utilization of the conventional battery pack, the inventors of this application have designed, through deep research, a battery module sampling assembly, allowing the sampling unit to be directly connected to the battery management module unit, thus omitting the adapting wire harness, and improving the space utilization of the battery pack.

The battery module sampling assembly and/or battery pack disclosed in the embodiments of this application may be used in but is not limited to electric apparatuses such as vehicles, ships, or aircrafts. The electric apparatus may be but is not limited to a mobile phone, a tablet, a laptop computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like. The battery pack and the like disclosed in this application can be used to form a power supply system of the electric apparatus, so that it is convenient to provide electric propulsion for the electric apparatus, and the space utilization of the battery pack can also be improved.

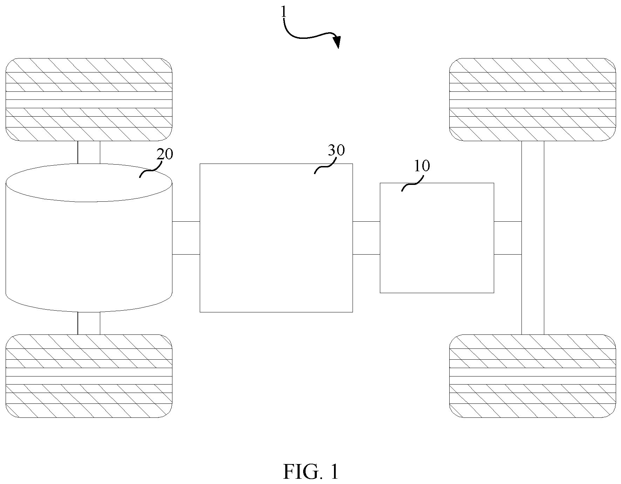

FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery pack 10 inside. For example, the battery pack 10 may be disposed at the bottom, front, or rear of the vehicle 1. The battery pack 10 may be configured to supply power to the vehicle 1. For example, the battery pack 10 may be used as an operational power source for the vehicle 1 that is configured for a circuit system of the vehicle 1, for example, to satisfy power needs of start, navigation, and running of the vehicle 1. In another embodiment of this application, the battery pack 10 can be used as not only the operational power source for the vehicle 1, but also as a driving power source for the vehicle 1, replacing or partially replacing fossil fuel or natural gas to provide driving traction for the vehicle 1.

The vehicle 1 may be further provided with a motor 20 and a controller 30 inside, where the controller 30 is configured to control the battery pack 10 to supply power to the motor 20, for example, to satisfy power needs of start, navigation, and driving of the vehicle 1.

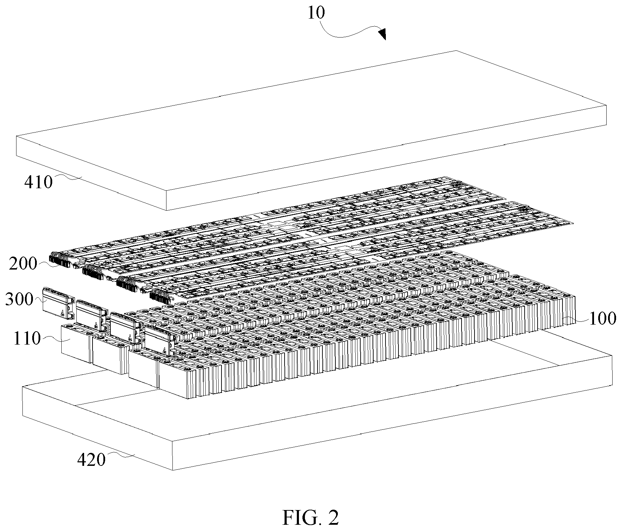

FIG. 2 is a schematic structural diagram of a battery pack 10 according to an embodiment of this application.

In some embodiments, referring to FIGs. 2, 3, and 4, an embodiment of this application provides a battery module sampling assembly including a sampling module assembly and a battery management module assembly.

The sampling module assembly includes a sampling unit 200 in corresponding electrical connection with a battery module 100, where the sampling unit 200 includes a first collection terminal 210. The battery management module assembly includes a battery management module unit 300 corresponding to the sampling unit 200, where the battery management module unit 300 has a second collection terminal 310 matching the first collection terminal 210 to electrically connect the battery management module unit 300 to the sampling unit 200.

When the battery module sampling assembly is in use, the first collection terminal 210 can be connected to the second collection terminal 310 in a fitting manner, so that voltage signals, temperature signals, and the like of battery cells 110 in the battery module 100 can be transmitted to the battery management module unit 300 through the sampling unit 200, the first collection terminal 210, and the second collection terminal 310, so as to implement effective transmission and collection of signals such as voltage signals and temperature signals of the battery cells 110; and the battery management module unit 300 can also perform thermal management, safety management, and/or the like on the battery cells 110 in the battery module 100. It can be understood that the sampling unit 200 is directly connected to the battery management module unit 300, omitting adapting wire harness connected between the sampling unit 200 and the battery management module unit 300, and thereby improving space utilization of the battery pack 10, as well as shortening assembling time and improving assembling efficiency.

It should be noted that for the sampling unit 200 in corresponding electrical connection with the battery module 100 and the battery management module unit 300 corresponding to the sampling unit 200, the correspondence may be one-to-one, one-to-more, or more-to-one correspondence.

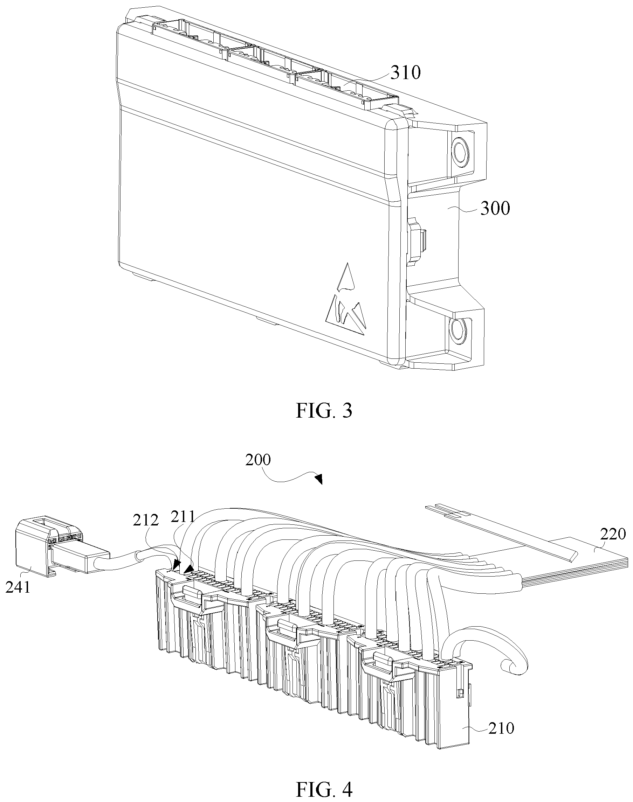

In some embodiments, referring to FIGs. 2 and 4, each battery module 100 includes a plurality of battery cells 110, and the first collection terminal 210 has a plurality of first collection ports 211 to be in corresponding electrical connection with the plurality of battery cells 110 in the battery module 100.

As shown in FIGs. 2 and 4, the plurality of first collection ports 211 may be in one-to-one corresponding electrical connection with the plurality of battery cells 110.

In this way, the battery management module unit 300 can obtain signals such as voltage signals and temperature signals of corresponding battery cells 110 via the first collection ports 211 of the first collection terminal 210 of the sampling unit 200, making it more convenient for effective transmission and collection of signals such as voltage signals and temperature signals.

In some other embodiments, the first collection port 211 of the first collection terminal 210 may be electrically connected to a plurality of battery cells 110, so as to collect signals such as voltage signals and temperature signals of the plurality of battery cells 110.

In some embodiments, referring to FIGs. 4, 5, and 6, the sampling module assembly includes a plurality of sampling units 200, and the first collection terminal 210 of each sampling unit 200 further has a second collection port 212. In any two of the sampling units 200, the second collection port 212 of the first collection terminal 210 of one sampling unit 200 and the second collection port 212 of the first collection terminal 210 of the other sampling unit 200 are electrically connected to each other.

In other words, in any two of the sampling units 200, data collected by one sampling unit 200 can be transmitted to a battery management module unit 300 connected to the other sampling unit 200 via the other sampling unit 200.

In this way, one battery management module unit 300 can collect signals such as voltage signals and temperature signals of battery cells 110 in at least two battery modules 100 via two collection units 200 electrically connected to each other, widening the application range of the battery module sampling assembly.

In some embodiments, in any two of the sampling units 200, the second collection port 212 of the first collection terminal 210 of one sampling unit 200 and the second collection port 212 of the first collection terminal 210 of the other sampling unit 200 may be electrically connected to each other through a connecting wire.

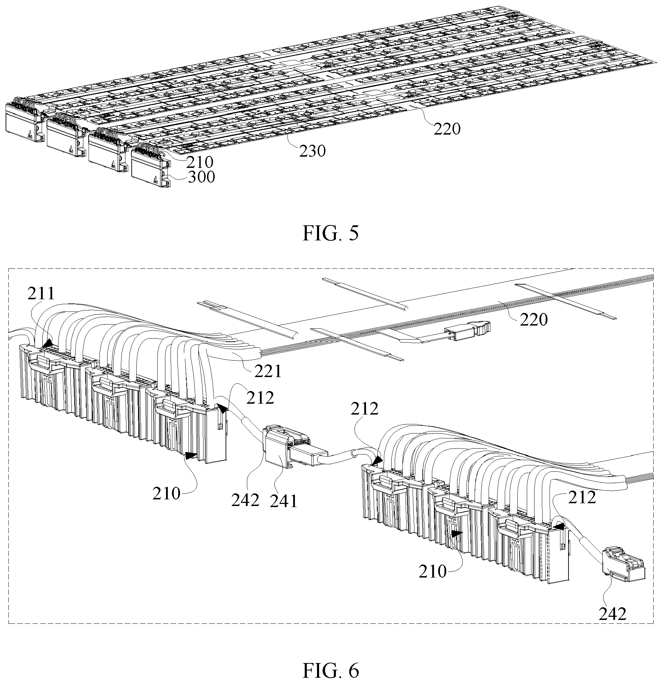

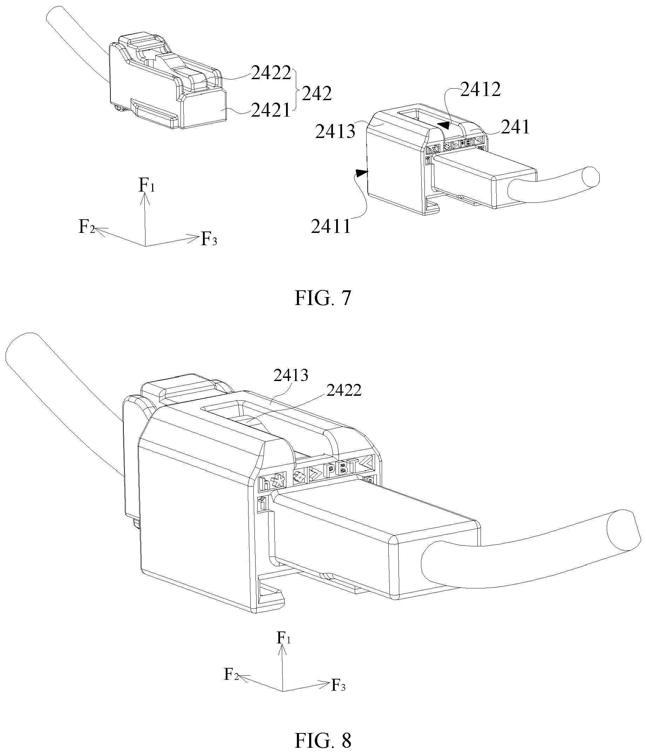

In some embodiments, referring to FIG. 6 in conjunction with FIGs. 7 and 8, in any two of the sampling units 200, a first connector assembly 241 is connected to the second collection port 212 of one first collection terminal 210, and a second connector assembly 242 matching the first connector assembly 241 is connected to the second collection port 212 of the other first collection terminal 210.

In this way, the second collection port 212 of one first collection terminal 210 and the second collection port 212 of the other first collection terminal 210 are electrically connected to each other via the first connector assembly 241 and the second connector assembly 242.

It can be understood that one battery management module unit 300 can collect signals such as voltage signals and temperature signals of battery cells 110 in at least two battery modules 100. In addition, the first connector assembly 241 is detachably connected to the second connector assembly 242, making it convenient for disassembling and assembling, and facilitating mass production of the battery module sampling assembly.

In some embodiments, referring to FIGs. 7 and 8, the first connector assembly 241 is provided with a slot portion, and the second connector assembly 242 is provided with an inserting portion fitting with the slot portion, so that the second connector assembly 242 can be electrically connected to the first connector assembly 241 when the inserting portion is inserted in the slot portion.

The first connector assembly 241 and the second connector assembly 242 are electrically connected to each other through insertion, featuring convenient operation, and thus effectively improving assembling efficiency while also facilitating mass production of the battery module sampling assembly.

In some embodiments, referring to FIGs. 7 and 8, the slot portion includes a first slot 2411 and a second slot 2412, and the inserting portion includes a first inserting portion 2421 and a second inserting portion 2422 connected to the first inserting portion 2421, where the first inserting portion 2421 is inserted in the first slot 2411, and the second inserting portion 2422 is inserted in the second slot 2412.

The first inserting portion 2421 is inserted in the first slot 2411 and the second inserting portion 2422 is inserted in the second slot 2412, so that the inserting portion is more firmly inserted in the slot portion, improving reliability of the electrical connection between the first connector assembly 241 and the second connector assembly 242, and also allowing for better collection of signals such as voltage signals and temperature signals of the battery cells 110.

In some embodiments, the first slot 2411 and the second slot 2412 are stacked in a first direction F₁, the first inserting portion 2421 is inserted in the first slot 2411 in a second direction F₂, the second inserting portion 2422 is inserted in the second slot 2412 in the second direction F₂, and size of the first inserting portion 2421 in a third direction F₃ is larger than that of the second inserting portion 2422 in the third direction F₃.

It can be understood that the second inserting portion 2422 is connected to a side of the first inserting portion 2421 in the first direction F₁, so that the inserting portion can be more firmly inserted in the slot portion, thus improving the reliability of the electrical connection between the first connector assembly 241 and the second connector assembly 242.

As shown in FIGs. 7 and 8, the first direction Fi is an up-down direction, the second direction F₂ is a left-right direction, and the third direction F₃ is a front-back direction. In other words, the upper second inserting portion 2422 is inserted in the second slot 2412 in the left-right direction, and the lower first inserting portion 2421 is inserted in the first slot 2411 in the left-right direction. In addition, the size of the first inserting portion 2421 in the front-back direction is larger than that of the second inserting portion 2422 in the front-back direction.

In some embodiments, the second connector assembly 242 includes two side portions 2413 opposite and apart from each other in the third direction F₃, and the second slot 2412 is formed between the two side portions 2413, so that the second inserting portion 2422 inserted in the second slot 2412 is limited between the two side portions 2413, thus improving the reliability of the electrical connection between the first connector assembly 241 and the second connector assembly 242.

In some embodiments, referring to FIGs. 4 and 6, the first collection terminal 210 of each sampling unit 200 has two second collection ports 212, where a first connector assembly 241 and a second connector assembly 242 matching the first connector assembly 241 are respectively connected to the two second collection ports 212 of the first collection terminal 210 of one sampling unit 200.

In this way, among three adjacent sampling units 200, the sampling unit 200 in the middle can be connected, via the first connector assembly 241 thereof, to the second connector assembly 242 at the second collection port 212 of the first collection terminal 210 of one adjacent sampling unit 200 in a fitting manner, and the sampling unit 200 in the middle can also be connected, via the second connector assembly 242 thereof, to the first connector assembly 241 at the second collection port 212 of the first collection terminal 210 of the other adjacent sampling unit 200 in a fitting manner.

This not only facilitates the electrical connection between two adjacent sampling units 200 but also improves the assembling efficiency.

In some embodiments, referring to FIG. 5, the sampling unit 200 further includes a connecting assembly, and the first collection terminal 210 of each sampling unit 200 is configured to be in corresponding electrical connection with the battery cells 110 via the connecting assembly.

In this way, the battery management module unit 300 can obtain signals such as voltage signals and temperature signals of a plurality of battery cells 110 via the first collection terminal 210 and connecting assembly of a corresponding sampling unit, implementing effective transmission and collection of signals such as voltage signals and temperature signals.

In some embodiments, the plurality of first collection ports 211 of the first collection terminal 210 are in one-to-one corresponding electrical connection with a plurality of battery cells 110.

In some embodiments, referring to FIGs. 5 and 6, the connecting assembly includes a cable 220 with one end connected to the first collection terminal 210 and a plurality of electrically conductive components 230 disposed on the cable 220, where each of the electrically conductive components 230 is configured to be electrically connected to one corresponding battery cell 110.

In other words, the first collection terminal 210 of each sampling unit 200 is electrically connected to corresponding battery cells 110 via a corresponding cable 220 and corresponding electrically conductive components 230.

In this way, the battery management module unit 300 can obtain signals such as voltage signals and temperature signals of the plurality of battery cells 110 via the sampling unit 200, implementing effective transmission and collection of signals such as voltage signals and temperature signals.

In some embodiments, referring to FIG. 6, the cable 220 is provided with a plurality of wires 221 at one end. In one sampling unit 200, the plurality of wires 221 of the cable 220 are in one-to-one corresponding electrical connection with the plurality of first collection ports 211 of the first collection terminal 210. In this way, the first collection terminal 210 of each sampling unit 200 can be in one-to-one corresponding electrical connection with the battery cells 110 via the connecting assembly.

In some embodiments, the electrically conductive component 230 may be a copper bar, and the cable 220 is connected to poles of the corresponding battery cells 110 via the copper bars.

In some embodiments, referring to FIG. 2, the sampling module assembly includes a plurality of sampling units 200 in one-to-one corresponding electrical connection with battery modules 100, and the battery management module assembly includes a plurality of battery management module units 300 in one-to-one correspondence with the sampling units 200. A sampling unit 200 is electrically connected to a corresponding battery management module unit 300 via a first collection terminal 210 and a second collection terminal 310. In this way, the sampling unit 200 can be directly connected to the corresponding battery management module unit 300, omitting adapting wire harness connected between the sampling unit 200 and the corresponding battery management module unit 300, and thereby improving space utilization of the battery pack 10.

In some embodiments, referring to FIG. 2, an embodiment of this application provides a battery pack 10 including a battery module sampling assembly and a battery module 100.

In some embodiments, referring to FIG. 2, the battery pack 10 further includes an upper housing body 410 and a lower housing body 420, where the upper housing body 410 and the lower housing body 420 define an accommodating recess, and the battery module 100, a sampling module assembly, and a battery management module assembly are all accommodated in the accommodating recess. The battery module 100, the sampling module assembly, and the battery management module assembly can be accommodated in the accommodating recess, so that the battery module 100, the sampling module assembly, and the battery management module assembly can be well protected, and it is also convenient to move the battery pack 10 as a whole, improving the reliability and convenience of use of the battery pack 10.

In some embodiments, an embodiment of this application provides an electric apparatus including the foregoing battery pack 10.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art can further make several modifications and improvements without departing from the concept of this application, and these modifications and improvements also fall within the protection scope of this application. Therefore, the protection scope of this application should be subject to the appended claims.

## Claims

1. A battery module sampling assembly, comprising:
a sampling module assembly comprising a sampling unit (200) in corresponding electrical connection with a battery module (100), wherein the sampling unit (200) comprises a first collection terminal (210); and
a battery management module assembly comprising a battery management module unit (300) corresponding to the sampling unit (200), wherein the battery management module unit (300) has a second collection terminal (310) matching the first collection terminal (210) to electrically connect the battery management module unit (300) to the sampling unit (200).

2. The battery module sampling assembly according to claim 1, wherein each battery module (100) comprises a plurality of battery cells (110); and
the first collection terminal (210) has a plurality of first collection ports (211) to be in corresponding electrical connection with the plurality of battery cells (110) in the battery module (100).

3. The battery module sampling assembly according to claim 2, wherein the sampling module assembly comprises a plurality of sampling units (200); and
the first collection terminal (210) of each sampling unit (200) further has a second collection port (212); wherein
in any two of the sampling units (200), the second collection port (212) of the first collection terminal (210) of one sampling unit (200) and the second collection port (212) of the first collection terminal (210) of the other sampling unit (200) are electrically connected to each other.

4. The battery module sampling assembly according to claim 3, wherein in any two of the sampling units (200), a first connector assembly (241) is connected to the second collection port (212) of one first collection terminal (210), and a second connector assembly (242) matching the first connector assembly (241) is connected to the second collection port (212) of the other first collection terminal (210).

5. The battery module sampling assembly according to claim 4, wherein the first connector assembly (241) is provided with a slot portion, and the second connector assembly (242) is provided with an inserting portion fitting with the slot portion, so that the second connector assembly (242) is able to be electrically connected to the first connector assembly (241) when the inserting portion is inserted in the slot portion.

6. The battery module sampling assembly according to claim 5, wherein the slot portion comprises a first slot (2411) and a second slot (2412); and
the inserting portion comprises a first inserting portion (2421) and a second inserting portion (2422) connected to the first inserting portion (2421); wherein
the first inserting portion (2421) is inserted in the first slot (2411); and
the second inserting portion (2422) is inserted in the second slot (2412).

7. The battery module sampling assembly according to any one of claims 3 to 6, wherein the first collection terminal (210) of each sampling unit (200) has two second collection ports (212); wherein
a first connector assembly (241) and a second connector assembly (242) matching the first connector assembly (241) are respectively connected to the two second collection ports (212) of the first collection terminal (210) of one sampling unit (200).

8. The battery module sampling assembly according to any one of claims 2 to 7, wherein the sampling unit (200) further comprises a connecting assembly; and
the first collection terminal (210) of each sampling unit (200) is configured to be in corresponding electrical connection with the battery cells (110) via the connecting assembly.

9. The battery module sampling assembly according to claim 8, wherein the connecting assembly comprises a cable (220) with one end connected to the first collection terminal (210) and a plurality of electrically conductive components (230) disposed on the cable (220); wherein
each of the electrically conductive components (230) is configured to be electrically connected to one corresponding battery cell (110).

10. A battery pack, comprising:
the battery module sampling assembly according to any one of claims 1 to 9; and
a battery module (100).

11. The battery pack according to claim 10, further comprising an upper housing body (410) and a lower housing body (420), wherein the upper housing body (410) and the lower housing body (420) define an accommodating recess; and
the battery module (100), the sampling module assembly, and the battery management module assembly are all accommodated in the accommodating recess.

12. An electric apparatus, comprising the battery pack (10) according to claim 10 or 11.
